# EUROPÄISCHE PATENTSCHRIFT

(11) **EP 3 186 206 B1**
(45) Veröffentlichungstag und Bekanntmachung des Hinweises auf die Patenterteilung: **19.07.2023**
(21) Anmeldenummer: 15760114.7
(22) Anmeldetag: 24.08.2015
(51) Int. Cl.: C03C 3/095, C03C 3/102, C03C 3/15, C03C 3/16, C03C 4/00, C03C 4/02, C03C 4/12

(54) **LUMINESZIERENDE GLASZUSAMMENSETZUNG**
LUMINESCENT GLASS COMPOSITION
COMPOSITION DE VERRE LUMINESCENT

(30) Priorität: 27.08.2014 EP 14182551
(43) Veröffentlichungstag der Anmeldung: 05.07.2017
(73) Patentinhaber: D. Swarovski KG, 6112 Wattens (AT)
(72) Erfinder: DEBBAGE, Roy, 6175 Kematen in Tirol (AT); HAID, Rainer, 6426 Roppen (AT); JUDMAIER, Helmut, 6114 Kolsass (AT); MAIER, Johannes, A-6020 Innsbruck (AT); MEISSL, Florian, A-6063 Rum (AT); SPRACHMANN, Gerold, A-6114 Kolsassberg (AT)
(74) Vertreter: Moore, Michael Richard
(86) Internationale Anmeldenummer: PCT/EP2015/069382
(87) Internationale Veröffentlichungsnummer: WO 2016/030340

(56) Entgegenhaltungen:
- EP-A1- 0 738 243
- EP-A2- 1 491 350
- US-A- 5 516 227
- US-A1- 2011 189 412
- US-B2- 7 256 398

## Beschreibung

### GEBIET DER ERFINDUNG

Die Erfindung betrifft facettierte Schmucksteine auf Basis einer lumineszierenden Glaszusammensetzung, die bestimmte Oxide der seltenen Erden enthält und somit eine Identifikation der facettierten Schmucksteine ermöglicht.

### STAND DER TECHNIK

Synthetische Schmucksteine aus bleifreiem sowie bleihaltigem Glas und synthetische Edelsteine werden in der Regel in völlig unterschiedlichen Qualitäten gefertigt. In vielen Ländern unterliegen Schmucksteine sogenannten Produkt-Compliance-Richtlinien, die den Gehalt von möglicherweise schädlichen Inhaltsstoffen limitieren.

Auf dem Schmuckstein-Sektor herrscht seit ca. 2005 am Weltmarkt ein starker Wettbewerb mit massivem Preisdruck. Markenprodukte werden häufig kopiert, beziehungsweise unter falscher Angabe der Herkunft gehandelt. Durch die enorme Vielfalt der gehandelten Steine, ist eine rasche Unterscheidung von Original und Kopie nur sehr schwer möglich. Die aus Markenpiraterie entstandenen Schäden sind enorm. Zusätzlich erfüllen die Schmuckstein-Kopien häufig nicht die gleichen Qualitätsstandards und Compliance-Vorschriften; schädliche Inhaltsstoffe können - je nach Land - zu enormen Haftungsproblemen führen.

Zum gegenwärtigen Zeitpunkt ist es üblich, synthetische Schmucksteine in darauf spezialisierten Labors auf Echtheit zu überprüfen. Hierzu wird die chemische Zusammensetzung des Glases des Schmucksteins ermittelt und seine Schliffgeometrie/Brillanz analysiert und verglichen. Diese Prüfungen sind relativ teuer und zeitaufwändig und für eine Schnell-Analyse am Markt nicht einsetzbar.

Eine bekannte Methode zur Identifizierung synthetischer Edelsteine ist die Markierung mit Laser-Gravuren. Diese Methode kann aufgrund ihrer hohen Kosten sowie technischer Limitierungen bei synthetischen Schmucksteinen aus Glas nur sehr begrenzt eingesetzt werden.

Um Luxusprodukte vor Marken-Piraterie zu schützen, existieren zahlreiche Produkt-Authentifizierungs-Lösungen, wie beispielsweise mehrstufige Sicherheitsaufkleber, Hologramme, Sicherheitstinten, RFID-Systeme ("radio frequency identification"), etc. Diese Methoden sind für Schmucksteine jedoch nicht anwendbar, da sie das optische Erscheinungsbild des Schmucksteins negativ beeinflussen würden.

Eine Kombination aus Lumineszenz-Markern, die auf Artikel aufgebracht oder eingebracht werden kann, ist bekannt. Diese Lumineszenz-Marker lassen sich nicht unter Erhalt der chemischen Bindungen ins Glas einschmelzen. Nach dem Einschmelzen sind die ursprünglichen chemischen Verbindungen, die Bestandteile der Lumineszenz-Marker waren, vielmehr im Glasnetzwerk gelöst. Die ursprüngliche Lumineszenz der patentgemäßen Keramik-Partikel geht verloren und ist deshalb in den fertigen Produkten nicht mehr detektierbar.

Lumineszierende Phosphorgläser, die mehr als 2 Mol-% bestimmter Oxide der Seltenerdmetalle enthalten, sind aus der Patentschrift US 2005 0253113 (SCHOTT) bekannt. Mit Seltenerdelementen dotierte Quarzgläser sind aus der EP 0466932 A1 (FURUKAWA) bekannt.

Glasperlen, die Dotierstoffe ausgewählt aus den seltenen Erden in Mengen von 0.5 bis 3 Mol-% enthalten, sind aus der US 7,256,398 bekannt. In diesen relativ hohen Konzentrationen sind Dotierstoffe im Glas jedoch unerwünscht, da die seltenen Erden bekannterweise die Einfärbung des Glases ändern. Darüber hinaus führen Dotierstoff-Zugaben in oben genannten Konzentrationen zu deutlichen Erhöhungen der Rohstoffkosten der Glasmischung, sodass solche Zusammensetzungen für synthetische Schmucksteine nicht mehr wirtschaftlich einsetzbar sind.

Dotierstoffe in Konzentrationen von einstelligen Prozentbereichen (1% entspricht 10.000 mg/kg) sind vergleichsweise einfach mit gängigen Analysenmethoden wie RFA nachweisbar. Allerdings führen sie zu Einfärbungen der Gläser, und sind daher in diesen Konzentrationen nicht als Dotierstoffe geeignet.

Aufgabe der vorliegenden Erfindung war es, facettierte Schmucksteine aus Glas zur Verfügung zu stellen, die lumineszieren, aber so geringe Mengen an Dotierstoffen enthalten, dass sie einerseits keine Farbveränderung des Glases bewirken und andererseits eindeutig identifizierbare Banden im Emissionsspektrum aufweisen. Die Dotierstoffe dienen als "Echtheits-Markierung" und ermöglichen eine Identifizierung über ein tragbares Analysegerät.

### BESCHREIBUNG DER ERFINDUNG

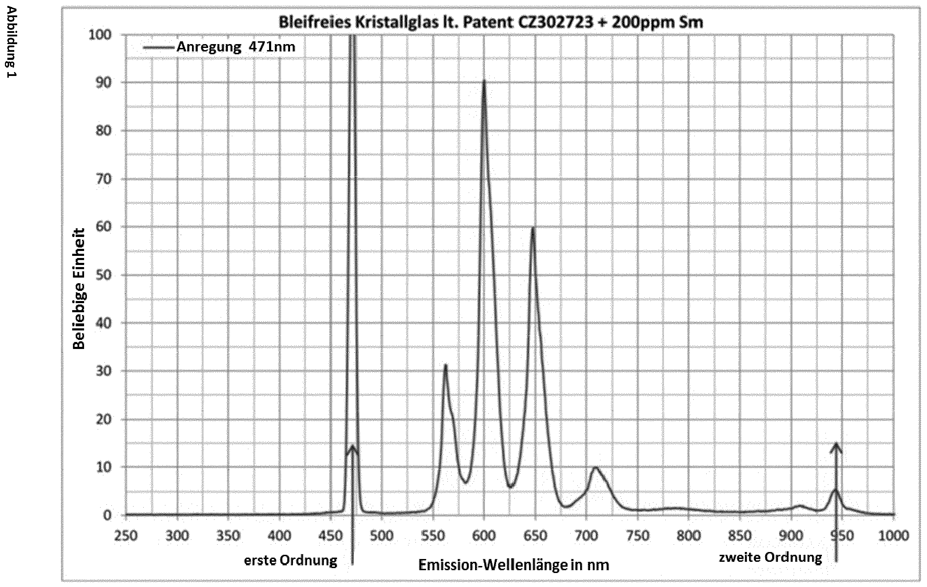

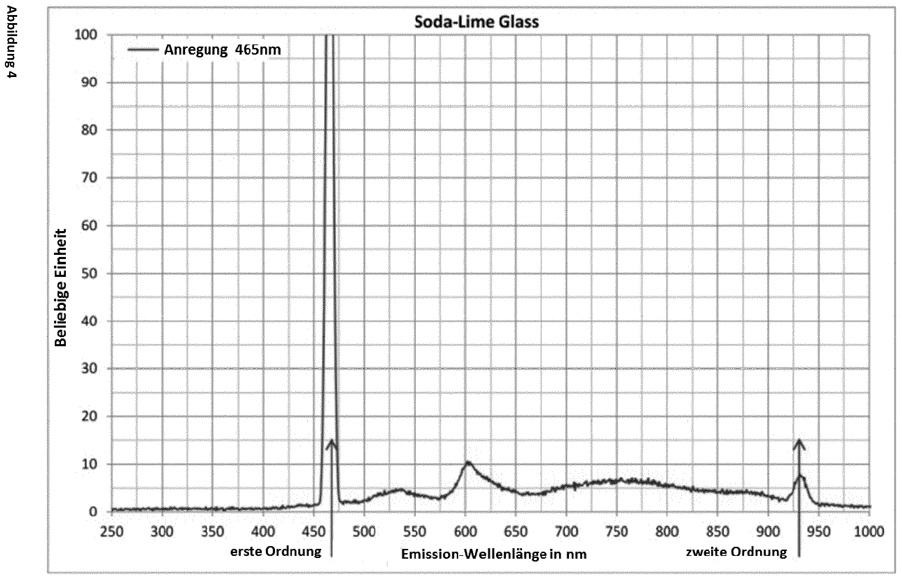

Überraschenderweise wurde gefunden, dass diese Aufgabe durch facettierte Schmucksteine aus Glas gemäß Anspruch 1 gelöst werden kann. Die Oxide der Seltenerdmetalle Scandium, Lanthan, Cer, Praseodym, Samarium, Europium, Yttrium, Terbium, Dysprosium, Holmium, Thulium, Ytterbium und Lutetium sind in diesen Zusammensetzungen in Konzentrationen von 2 bis 2.000 mg/kg der Glaszusammensetzung enthalten (dies entspricht 0.0002 bis 0.2 Gew.-% bezogen auf ein Kilogramm der Glaszusammensetzung) und liefern selbst in diesen geringen Konzentrationen eine ausreichend starke Fluoreszenzstrahlung, die eine Identifikation ermöglicht (vgl. **Abbildungen 1 bis 4).** Eine bevorzugte Ausführungsform der Glaszusammensetzung enthält die spezifischen Oxide der Seltenerdmetalle in etwa 5 bis etwa 1.000 mg/kg der Glaszusammensetzung; besonders bevorzugt sind Konzentrationen von etwa 5 bis etwa 700 mg/kg und insbesondere etwa 5 bis etwa 500 mg/kg und ganz besonders bevorzugt etwa 5 bis etwa 300 mg/kg.

Die anspruchsgemäß facettierten Schmucksteine aus Glas zeigen nach Anregung mit Licht, insbesondere im sichtbaren Bereich, charakteristische Fluoreszenzsignale für Marker und Kristallglasmatrix, die mit entsprechenden Geräten ausgelesen werden können. In den erfindungsgemäß facettierten Schmucksteinen aus Glas sind wenigstens zwei, vorzugsweisewenigstens drei verschiedene Oxide der genannten Seltenerdmetalle enthalten. Dies ermöglicht es, das Fluoreszenz-Emissions-Spektrum als "Finger-Print" zur Identifizierung der Glaszusammensetzung zu verwenden. Durch Variation der Konzentrationsverhältnisse der Oxide der Seltenerdmetalle in den einzelnen Chargen bei der Glasherstellung und durch Integration der Intensitäten der Peaks ist zudem nicht nur eine Authentizitätsprüfung möglich, sondern auch eine Zuordnung zu Chargen, d.h. das Herstellungsdatum kann ebenso ermittelt werden.

Durch die besonderen Reflexionseigenschaften aufgrund der Facettierung von Schmucksteinen ist es möglich, bereits sehr niedrige Gehalte an Markierungselementen mithilfe von miniaturisierten Hochleistungsspektrometern zu erkennen, auch wenn vergleichsweise kleine Schmucksteine in Schmuckstücken verbaut sind. Der Grund dafür liegt in der meist mehrfachen Reflexion von Lichtstrahlen in facettierten Schmucksteinen, durch die sich eine lange Wegstrecke bzw. hohe Wahrscheinlichkeit einer Anregung ergibt. Eine quantitative Analyse der zugrundeliegenden Glaszusammensetzung und insbesondere der Dotierstoffe wäre bei solch niedrigen Konzentrationen nicht oder nur mit sehr hohem Aufwand möglich. Die Verfahren, wie man Facettierungen erhält, sind dem Fachmann hinlänglich bekannt (z.B. durch Schleifen und Polieren oder Blankpressen).

Facettierte Schmucksteine basierend auf dotierten Glaszusammensetzungen sind beispielsweise von Swarovski unter den Bezeichnungen A 5328 MM2.5 Cry, A 5000 MM10 Cry, A 6041 MM18 Cry erhältlich.

Zusätzlich wird insbesondere bei Verspiegelung von facettierten Schmucksteinen ("Foiling") ein Austritt von Fluoreszenzsignalen in Betrachtungsrichtung begünstigt. Erfindungsgemäß besonders bevorzugt sind daher facettierte Schmucksteine aus Glas, die partiell verspiegelt sind. Unter partieller Verspiegelung wird die Verspiegelung mindestens einer Facette oder Fläche verstanden. Beispielsweise werden bei Chatons die Pavillonflächen verspiegelt. Die Verspiegelungen sowie die Verfahren zur Verspiegelung sind dem Fachmann hinlänglich bekannt (vide infra). Facettierte, verspiegelte Schmucksteine sind beispielsweise von Swarovski unter den Produkt-Bezeichnungen A 1100 PP0 Cry F (F steht für foiled; Silberspiegel), A 1088 SS39 Cry F, A 2058 SS6 Cry F, A 2088 SS34 Cry F, A 2078 SS6 Cry A HF (A für einen alternativen Silberspiegel), A 2078 SS6 Cry M HF (M für Al-Spiegel) erhältlich.

Durch die Kombination unterschiedlicher Markierungselemente in variierbaren Konzentrationsverhältnissen, kann - wie oben erwähnt - eine Art innere Codierung der auf diese Art und Weise markierten Kristallglasprodukte erfolgen. So wurde in Ausführungsbeispiel 2 (Tabelle 1) der Anteil von Terbiumoxid mit 0.015 Gew.-% und jener von Dysprosiumoxid mit 0.006 Gew.-% gewählt.

Durch die Facettierung der Glasschmucksteine und die dadurch erhöhte Reflexion im Vergleich zu ungeschliffenen Glasstücken kann mit äußerst geringen Konzentrationen der Dotierstoffe gearbeitet werden (vide supra), sogar im Bereich von 5 bis 300 mg/kg.

### ANREGUNG UND DETEKTION

Die Detektion der Markierung erfolgt mit tragbaren optischen Analysegeräten, welche die facettierten Schmucksteine mit elektromagnetischer Strahlung in ausgewählten Wellenlängenbereichen anregen. Die Fluoreszenzemissionsstrahlung und - fakultativ - deren Abklingverhalten werden anschließend wellenlängenselektiv ausgelesen und mithilfe von geeigneten Algorithmen analysiert, um die Echtheit des Schmucksteins zu erkennen. Derartige Analysegeräte werden beispielweise von der Firma Swiss Authentication Research and Development AG hergestellt und vertrieben. Die wellenlängenselektive Auswertung ermöglicht den quantitativen Vergleich der Fluoreszenzsignale bei den jeweils charakteristischen Wellenlängen der beigemengten Selten-Erden-Oxide. Erfindungsgemäß bevorzugt ist es, facettierte Schmucksteine aus Glas einzusetzen, die bei Anregung durch elektromagnetische Strahlung eine Fluoreszenz im Bereich von 300 bis 3.000 nm, vorzugsweise im Bereich 300 bis 1.100 nm aufweisen.

Der Schmuckstein gemäß der Erfindung kann verwendet werden in ein Verfahren zur Identifikation eines facettierten Schmucksteins aus Glas umfassend folgende Schritte:
(a) Bereitstellen eines erfindungsgemäßen facettierten Schmucksteins aus Glas;
(b) Anregung mit elektromagnetischer Strahlung;
(c) Detektion der erzeugten Fluoreszenz und
(d) gegebenenfalls Vergleich des Signals mit einem vorgegebenen Muster.

Vorzugsweise wird die Anregung wellenlängenselektiv vorgenommen, besonders bevorzugt bei Wellenlängen von 300 bis 780 nm. Vorzugsweise dient das Verfahren zur Identifikation der Produktionscharge des facettierten Schmucksteins aus Glas.

### GLASZUSAMMENSETZUNG

Unter Glas wird eine eingefrorene unterkühlte Flüssigkeit verstanden, die einen amorphen Festkörper bildet. Beispielsweise, aber nicht notwendigerweise erfindungsgemäß, können sowohl dotierte, oxidische Gläser als auch Chalkogenidgläser, metallische Gläser oder nicht-metallische Gläser eingesetzt werden. Auch Oxy-Nitrid-Gläser können geeignet sein. Es kann sich um Einkomponenten- (z.B. Quarzglas) oder Zweikomponenten- (z.B. Alkaliboratglas) oder Mehrkomponentengläser (Kalk-Natron-Glas) handeln.

Eine dotierte Glaszusammensetzung der facettierten Schmucksteine kann durch Schmelzen, durch Sol-Gel-Prozesse oder auch durch Stoßwellen hergestellt werden. Die Verfahren sind dem Fachmann bekannt. Anorganische Gläser, insbesondere oxidische Gläser können verwendet werden. Hierzu gehören Silikatgläser und in anderen Beispielen, die nicht erfindungsgemäß sind, Boratgläser oder Phosphatgläser. Bleifreie Gläser können verwendet werden. Silikatische Gläser haben gemeinsam, dass ihr Netzwerk hauptsächlich aus Siliziumdioxid (SiO₂) gebildet wird. Durch Zugabe weiterer Oxide wie beispielsweise Aluminiumoxid oder verschiedener Alkalioxide entstehen die Alumo- oder Alkali-Silikatgläser. Für die Einordnung entscheidend ist, welches Oxid mengenmäßig das zweithäufigste im silikatischen Grundglas ist. Ein Silikatglas ohne weitere Bestandteile - also reines SiO₂ - wird als Kiesel- oder Quarzglas bezeichnet. Treten als Hauptnetzwerkbildner eines Glases Phosphorpentoxid oder Bortrioxid auf, spricht man von Phosphat- bzw. Boratgläsern, deren Eigenschaften ebenfalls durch Zugabe weiterer Oxide eingestellt werden können. Die genannten Gläser bestehen größtenteils aus Oxiden, weshalb man sie zusammenfassend als oxidische Gläser bezeichnet.

Die dotierte Glaszusammensetzung enthält neben den Oxiden der Seltenerdmetalle Scandium, Lanthan, Cer, Praseodym, Samarium, Europium, Yttrium, Terbium, Dysprosium, Holmium, Thulium, Ytterbium und Lutetium in der anspruchsgemäßen Menge folgende Komponenten:
(a) etwa 35 bis etwa 85 Gew.-% SiO_{2;}
(b) 0 bis etwa 20 Gew.-% K₂O;
(c) 0 bis etwa 20 Gew.-% Na₂O;
(d) 0 bis etwa 5 Gew.-% Li₂O;
(e) 0 bis etwa 13 Gew.-% ZnO;
(f) 0 bis etwa 11 Gew.-% CaO;
(g) 0 bis etwa 7 Gew.-% MgO;
(h) 0 bis etwa 10 Gew.-% BaO;
(i) 0 bis etwa 4 Gew.-% Al₂O₃;
(j) 0 bis etwa 5 Gew.-% ZrO₂;
(k) 0 bis etwa 6 Gew.-% B₂O₃;
(l) 0 bis etwa 3 Gew.-% F;
(m) 0 bis etwa 2,5 Gew.-% CI.

Vorzugsweise enthält die dotierte Glaszusammensetzung:
(a) etwa 45 bis etwa 75 Gew.-% SiO_{2;}
(b) 0 bis etwa 10 Gew.-% K₂O;
(c) etwa 5 bis etwa 20 Gew.-% Na₂O;
(d) etwa 0,5 bis etwa 5 Gew.-% Li₂O;
(e) etwa 3 bis etwa 13 Gew.-% ZnO;
(f) etwa 2 bis etwa 11 Gew.-% CaO;
(g) 0 bis etwa 7 Gew.-% MgO;
(h) 0 bis etwa 10 Gew.-% BaO;
(i) etwa 0,5 bis etwa 4 Gew.-% Al₂O₃;
(j) etwa 0,5 bis etwa 4 Gew.-% ZrO₂;
(k) etwa 1 bis etwa 6 Gew.-% B₂O₃;
(l) 0 bis etwa 3 Gew.-% F;
(m) 0 bis etwa 2,5 Gew.-% CI.

Erfindungsgemäß besonders bevorzugt ist eine Glaszusammensetzung enthaltend:
(a) etwa 48 bis etwa 65 Gew.-% SiO_{2;}
(b) etwa 1 bis etwa 5 Gew.-% K₂O;
(c) etwa 10 bis etwa 17 Gew.-% Na₂O;
(d) etwa 0,5 bis etwa 3 Gew.-% Li₂O;
(e) etwa 7 bis etwa 13 Gew.-% ZnO;
(f) etwa 4 bis etwa 11 Gew.-% CaO;
(g) 0 bis etwa 3 Gew.-% MgO;
(h) 0 bis etwa 1 Gew.-% BaO;
(i) etwa 0,5 bis etwa 4 Gew.-% Al₂O₃;
(j) etwa 0,5 bis 4 Gew.-% ZrO₂;
(k) etwa 3 bis etwa 6 Gew.-% B₂O₃;
(l) 0 bis etwa 3 Gew.-% F;
(m) 0 bis etwa 2.5 Gew.-% CI.

In einem weiteren Beispiel auf Borsilikatglasbasis anstelle von Silikatglasbasis, dass nicht erfindungsgemäß ist, enthält die dotierte Glaszusammensetzung neben den Dotierstoffen in einer Konzentration die folgenden Komponenten:
(a) etwa 30 bis etwa 95 Gew.-% B₂O₃;
(b) 0 bis etwa 20 Gew.-% K₂O;
(c) 0 bis etwa 25 Gew.-% Na₂O;
(d) 0 bis etwa 5 Gew.-% Li₂O;
(e) 0 bis etwa 13 Gew.-% ZnO;
(f) 0 bis etwa 11 Gew.-% CaO;
(g) 0 bis etwa 7 Gew.-% MgO;
(h) 0 bis etwa 10 Gew.-% BaO;
(i) 0 bis etwa 4 Gew.-% Al₂O₃;
(j) 0 bis etwa 5 Gew.-% ZrO₂;
(k) 0 bis etwa 3 Gew.-% F;
(l) 0 etwa bis 2,5 Gew.-% CI.

In einem weiteren Beispiel auf Phosphatglasbasis anstelle von Silikatglasbasis, dass nicht erfindungsgemäß ist, enthält die dotierte Glaszusammensetzung neben den Dotierstoffen in einer Konzentration die folgenden Komponenten:
(a) etwa 30 bis etwa 95 Gew.-% P₂O₅;
(b) 0 bis etwa 30 Gew.-% K₂O;
(c) 0 bis etwa 30 Gew.-% Na₂O;
(d) 0 bis etwa 10 Gew.-% Li₂O;
(e) 0 bis etwa 20 Gew.-% ZnO;
(f) 0 bis etwa 20 Gew.-% CaO;
(g) 0 bis etwa 15 Gew.-% MgO;
(h) 0 bis etwa 30 Gew.-% BaO;
(i) 0 bis etwa 15 Gew.-% Al₂O₃;
(j) 0 bis etwa 15 Gew.-% SiO₂;
(k) 0 bis etwa 15 Gew.-% B₂O₃;
(l) 0 bis etwa 20 Gew.-% BaO.

Alle Mengenangaben sind dabei so zu verstehen, dass sie sich jeweils zu 100 Gew.-% ergänzen.

### GLASBESCHICHTUNG (FOILING ODER VERSPIEGELUNG)

Beschichtungen enthalten üblicherweise eine Schicht eines Metalls und/oder einer Metallverbindung wie beispielsweise Metalloxide, Metallnitride, Metallfluoride, Metallcarbide oder eine beliebige Kombination dieser Verbindungen in beliebiger Reihenfolge, die mittels einer der gängigen Beschichtungsverfahren auf die facettierten Schmucksteine aufgebracht werden. Es können auch aufeinanderfolgende Schichten verschiedener Metalle oder Metallverbindungen aufgebracht werden. Die Verfahren und Beschichtungen sind dem Fachmann hinlänglich bekannt.

Zu den Verspiegelungsverfahren zählen unter anderem PVD (physical vapour deposition), CVD (chemical vapour deposition), Lackieren sowie nasschemische Verfahren gemäß Stand der Technik.

### ALLGEMEINES MESSPRINZIP FÜR DIE FLUORESZENZSPEKTREN

Geeignete Messgeräte werden unter anderem von der Firma Horiba Jobin Yvon GmbH vertrieben. Bei diesen Messgeräten wird die von einer oder mehreren Lichtquellen emittierte Strahlung unterschiedlicher Wellenlängenbereiche spektral aufgeteilt und über eine Anordnung von optischen Elementen und Spaltblenden selektiert. Die in der Art spektral begrenzte Strahlung wird über Strahlformungselemente gebündelt und auf das zu messende Objekt gelenkt. Kommt es durch oben genannte Bestrahlung des Probenobjekts zu einer Emission, so tritt diese in die das Messobjekt umgebende Probenkammer aus. Über einen optischen Aufbau (Detektoraufbau), der dem Detektor vorgeschalten ist, wird die emittierte Strahlung wiederum spektral aufgeteilt und geometrisch auf den Detektor ausgerichtet. Dies kann mittels Spiegelsystem sowohl unter einem rechten Winkel zur Anregungsstrahlung als auch unter kleinem Winkel zum Lot der Anregungsstrahlung erfolgen. Der Detektoraufbau besteht im Wesentlichen aus einer Anordnung von lichtempfindlichen Sensoren (Array). Durch die vorher beschriebene geometrische Justierung der spektral zerlegten Strahlung auf die Anordnung der Detektionselemente können den einzelnen Sensoren Wellenlängenbereiche zugeteilt werden. Das Auslesesystem enthält eine programmierbare elektronische Einheit, welche die Aufbereitung und digitale Auswertung der empfangenen Signale ermöglicht. Das erhaltene Messsignal kann so digital verarbeitet und gespeichert werden.

### MESSPRINZIP FÜR TRAGBARE DETEKTOREN

Geeignete Geräte werden von der Firma Swiss Authentication Research and Development AG vertrieben (vide supra). Dabei wird die von einer oder mehreren Lichtquellen emittierte Strahlung über eine Anordnung optischer Strahlformungselemente auf das zu messende Objekt gelenkt. Kommt es durch oben genannte Bestrahlung des Probenobjekts zu einer Emission, so wird diese durch eine Anordnung optischer Elemente erfasst und auf ein optisches Gitter gelenkt. Die auf diese Weise spektral dispergierte Strahlung wird auf ein Detektorarray projiziert, so dass den einzelnen Sensoren Wellenlängenbereiche zugeordnet werden. Das Auslesesystem enthält eine programmierbare elektronische Einheit, welche die Aufbereitung und digitale Auswertung der empfangenen Signale ermöglicht. Das erhaltene Messsignal kann so digital verarbeitet und gespeichert werden.

Facettierte Steine (Quader der Dimension 40 mm x 12 mm x 12 mm) aus den Glaszusammensetzungen der Tabelle 1 zeigen neben der typischen Emission der jeweiligen Glasmatrix (Glasfluoreszenz), die bei den verschiedenen Gläsern in unterschiedlichen Bereichen liegt, allesamt ein Fluoreszenzspektrum, welches eine eindeutige Identifizierung zulässt (vgl. Abbildungen 1-4). Beispielhaft sind nachfolgend die Spektren der Beispiele 1, 2 und 3 abgebildet. Zu beachten ist, dass in den Abbildungen auch die im Probenraum des Messgerätes gestreute Anregungsstrahlung abgebildet wird. Sichtbar ist diese als erste und zweite Ordnung der gestreuten Anregungsstrahlung. Beispielhaft für 1 ist die Anregung bei 471nm (erste Ordnung) und 942nm (zweite Ordnung) erkennbar. Die Peaks bei diesen Wellenlängen stellen daher Messartefakte dar und sind zu vernachlässigen.

### SIMULATION DER FLUORESZENZ-EMISSION

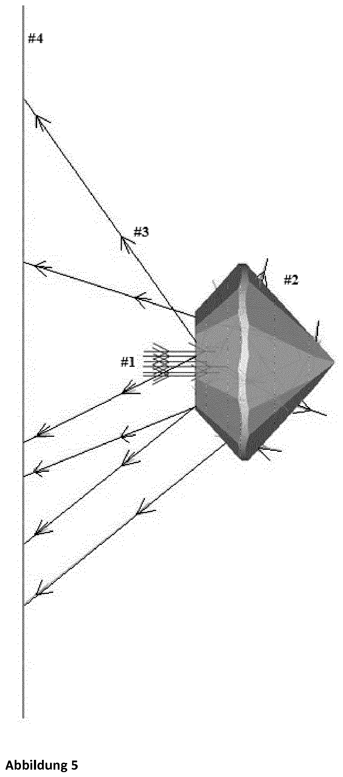

Um die Fluoreszenz-Emission von nicht-facettiertem und facettiertem Glas zu vergleichen sowie die Auswirkung einer Verspiegelung der facettierten Glassteine zu untersuchen, wurden Simulationen zur Fluoreszenz-Emission mittels der Raytracing-Software Zemax der Firma Radiant Zemax durchgeführt (Aufbau vgl. Abbildung 5).

Es wurden drei verschiedene Fluoreszenz-Emissionen simuliert:
(i) Für eine Glaskugel mit Radius 4 mm und den im Programm vorhandenen Parametern für Schott-N-BK7^{®} Glas; 2,2 mm Abstand von der Lichtquelle
(ii) Für einen Xilion^{®} 1028 SS39 Chaton der Firma Swarovski^{®} mit einem Durchmesser von 8,3 mm und einer Gesamtlänge von 5,8 mm und den im Programm vorhandenen Parametern für Schott-N-BK7^{®} Glas; 2,2 mm Abstand von der Lichtquelle; Tafelfläche des Chatons senkrecht zur Ausbreitungsrichtung des Lichtes
(iii) Für den Chaton entsprechend b), dessen Pavillon-Facetten als verspiegelt simuliert wurden (d.h. Pavillon-Facetten wurden als total reflektierend angenommen)

Die Lichtquelle wurde in der Simulation als perfekt kollimiert angenommen, mit einer Gesamtleistung von 1 Watt, einem Radius von 1mm und einer emittierten Wellenlänge von 450nm; Die Lichtquelle wurde in der Simulation so positioniert, dass der Einfall der Lichtstrahlen auf die Objekte senkrecht zur Tangentialebene des Eintrittspunktes (im Falle der Kugel) bzw. senkrecht zur Tafelebene und durch den Umkreismittelpunkt der Tafel (im Falle des Chatons) ist.

Über den Parameter "freie Weglänge" wurde definiert, wie weit die auftreffenden Strahlen in das Glasobjekt eindringen, bevor sie absorbiert und dann in Form von Fluoreszenzstrahlen (650nm) emittiert werden. Dies entspricht einer Simulation unterschiedlicher Konzentrationen an Dotierstoff in der Glaszusammensetzung. Je kleiner die freie Weglänge, desto höher ist die Konzentration an Dotierstoff; je größer die freie Weglänge, desto geringer ist die Konzentration an Dotierstoff.

In der Simulation diente als Detektor für die Fluoreszenz-Emission ein Rechteck der Fläche 30 mm x 30 mm, welches im Abstand von -5mm (d.h. 5mm hinter der Lichtquelle; vgl. **Abbildung 5****)** von der Lichtquelle senkrecht zur Strahlachse der Lichtquelle platziert wurde und nur die emittierte Strahlung (650nm) aufzeichnete.

Die auf das jeweilige Glasobjekt a) bis c) auftreffenden Strahlen unterlagen der Snellius'schen Brechung und Reflexion. Die von der Lichtquelle ausgehende Strahlung der Wellenlänge 450nm wurde durch die Glaskörper in unterschiedlichem Maß als Fluoreszenzstrahlung der Wellenlänge 650nm emittiert.

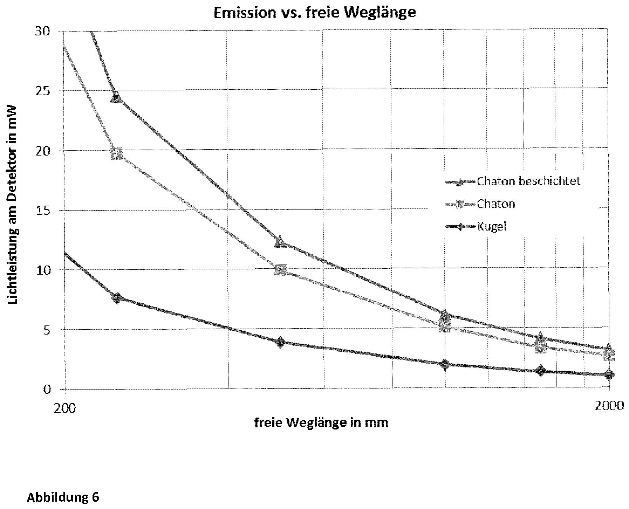

Verglichen wurde die auf dem Detektor auftreffende Lichtleistung bei den drei unterschiedlichen Geometrien. Die Simulationen (Abb. 6) zeigen eindeutig, dass im Falle einer Kugel-Geometrie (a) die geringste Fluoreszenz-Emission auftritt. Die Fluoreszenz-Emission des Xilion^{®} 1028 Chatons SS39 ist über den gesamten freien Weglängen-Bereich mehr als 2 Mal so hoch; dies entspricht einer mehr als 100%-igen Steigerung der Fluoreszenz im Vergleich zum nicht-facettierten Glaskörper. Ein beschichteter/verspiegelter Chaton zeigt nochmals eine - obgleich weniger deutlich ausfallende - Steigerung der Fluoreszenz-Emission.

### ABBILDUNSGVERZEICHNIS

Abbildung 1: Gemessene Fluoreszenz-Emission eines bleifreien Kristallglases gemäß Beispiel 1 mit 200 ppm Sm₂O₃-Zusatz (Anregung bei 471nm) gemessen an einem Quader der Größe 40 mm x 12 mm x 12 mm

Abbildung 2: Gemessene Fluoreszenz-Emission eines Hochbleikristallglases gemäß Beispiel 2 mit 60 ppm Dy₂O₃ und 150ppm Tb₂O₃ Zusätzen (Anregung bei 453nm) gemessen an einem Quader der Größe 40 mm x 12 mm x 12 mm

Abbildung 3: Gemessene Fluoreszenz-Emission eines Kalk-Natron Glases gemäß Beispiel 3 mit 5 ppm Eu₂O₃ Zusatz (Anregung bei 465nm) gemessen an einem Quader der Größe 40 mm x 12 mm x 12 mm

Abbildung 4 (Vergleichsbeispiel): Gemessene Fluoreszenz-Emission eines Kalk-Natron Glases ohne Zusatz von Dotierstoffen (Anregung bei 465 nm_{);} gemessen an einem Quader der Größe 40 mm x 12 mm x 12 mm.

Abbildung 5: Schematische Darstellung des Simulationsaufbaus mit folgender Legende:
- #1 Lichtquelle mit kollimierten Strahlen der Wellenlänge 450nm;
- #2 Chaton-Geometrie;
- #3 Fluoreszenz-Emission bei 650nm;
- #4 Detektor

Abbildung 6: Simulation der Fluoreszenz-Emission in Abhängigkeit von der Geometrie und der freien Weglänge

### BEISPIELE

### BEISPIELE 1 bis 15

In der folgenden Tabelle 1 sind die Oxid-Zusammensetzungen verschiedener Gläser wiedergegeben, die zur Herstellung der facettierten Schmucksteine verwendet werden. Alle Mengenangaben verstehen sich als Gew.-%. Dabei beziehen sich die Beispiele auf folgende Gläser:

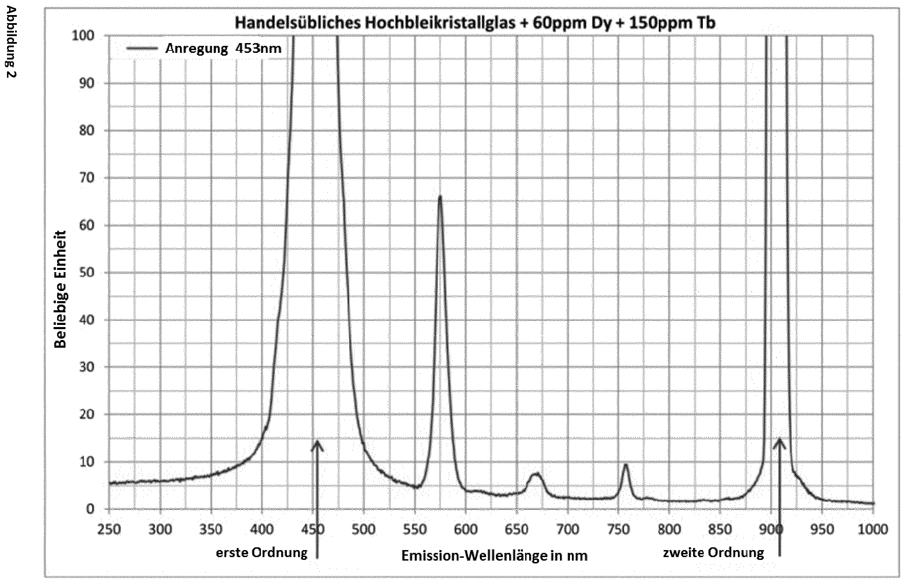

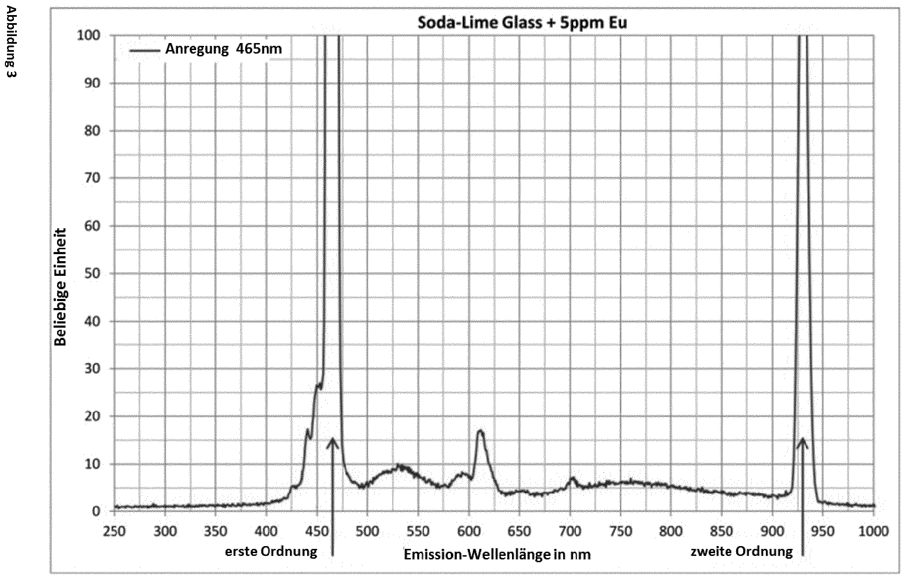

Beispiel 1: Bleifreies Kristallglas It. Patent CZ302723 (vgl. Abbildung 1); Beispiel 2: Handelsübliches Hochbleikristallglas (vgl. Abbildung 2); Beispiel 3: Handelsübliches Kalk-Natron-Glas (vgl. Abbildung 3); Beispiel 4: Standard Optisches Glas N-BK7^{®}; Beispiel 5: Handelsübliches Borosilikatglas;Beispiele 6 bis 15: Handelsübliche Farbgläser

**Tabelle 1**

| Glaszusammensetzungen mit Dotierungen (Teil 1). Beispiele 1, 3, 4 und 5 sind nicht Teil der Erfindung. | | | | | | | |
|---|---|---|---|---|---|---|---|
| **Beispiel** | **1** | **2** | **3** | **4** | **5** | **6** | **7** |
| **SiO₂** | 59,11 | 55,25 | 72,69 | 70,30 | 80,24 | 72,28 | 70,30 |
| **PbO** | | 31,90 | | | | | |
| **K₂O** | 3,49 | 8,80 | | 7,70 | 0,20 | 4,00 | 5,90 |
| **Na₂O** | 11,40 | 2,30 | 13,20 | 10,24 | 4,60 | 15,00 | 10,60 |
| **B₂O₃** | 3,07 | 0,30 | | 10,00 | 12,60 | | |
| **Li₂O** | 2,15 | | | | | | |
| **CaO** | 7,19 | | 9,29 | 0,20 | | 2,90 | 6,70 |
| **MgO** | | | 3,80 | | | | |
| **ZnO** | 7,71 | 1,00 | | | | | 1,10 |
| **Al₂O₃** | 0,43 | | 0,70 | | 2,30 | 0,10 | 1,60 |
| **TiO₂** | 2,08 | | | 0,20 | | 4,00 | |
| **As₂O₃** | | | | | | | |
| **Sb₂O₃** | 0,47 | 0,43 | 0,32 | 0,26 | | 0,12 | 0,50 |
| **BaO** | | | | 0,90 | | 1,50 | |
| **ZrO₂** | 2,08 | | | | | | |
| **P₂O₅** | 0,70 | | | | | | |
| **Gd₂O₃** | 0,10 | | | | | | |
| **Nd₂O₃** | | | | | | | 1,30 |
| **SnO₂** | | | | | | | 1,90 |
| **Sm₂O₃** | 0,0200 | | - | | | 0,0300 | |
| **Eu₂O₃** | | | 0,0005 | | 0,0050 | | |
| **Ho₂O₃** | | | - | 0,1700 | 0,0500 | | |
| **Tb₄O₇** | | 0,0150 | | 0,0300 | | | 0,0300 |
| **Dy₂O₃** | | 0,0060 | | | 0,0100 | | |
| **Sc₂O₃** | | | | | | 0,0400 | |
| **CeO** | | | | | | | 0,0400 |
| **Yb₂O₃** | | | | | | | 0,0300 |
| **Lu₂O₃** | | | | | | 0,0300 | |

**Tabelle 1**

| Glaszusammensetzungen mit Dotierungen (Teil 2). Beispiele 10, 11, 12, 14 and 15 sind nicht Teil der Erfindung. | | | | | | | | |
|---|---|---|---|---|---|---|---|---|
| **Beispiel** | **8** | **9** | **10** | **11** | **12** | **13** | **14** | **15** |
| **SiO₂** | 73,00 | 69,10 | 65,29 | 64,94 | 65,73 | 70,57 | 71,93 | 73,80 |
| **PbO** | | | 0,90 | | | | | |
| **K₂O** | 7,50 | 11,00 | 4,70 | 2,20 | | 2,60 | 0,70 | |
| **Na₂O** | 12,00 | 8,00 | 8,40 | 20,80 | 19,30 | 17,20 | 15,20 | 10,90 |
| **B₂O₃** | 2,00 | | | 3,80 | 4,10 | 2,40 | | 1,00 |
| **CaO** | 2,80 | 7,00 | 6,40 | 4,80 | 4,20 | 3,30 | 5,30 | 7,00 |
| **MgO** | | | 2,70 | 0,20 | 0,10 | 0,20 | 0,10 | 0,20 |
| **ZnO** | | 3,00 | | 1,70 | | 0,70 | | |
| **Al₂O₃** | 2,00 | 1,00 | 0,10 | 0,20 | 2,70 | 1,70 | 4,90 | 6,80 |
| **As₂O₃** | | | | | | 0,70 | | |
| **Sb₂O₃** | 0,30 | 0,30 | 0,30 | | | | | 0,18 |
| **BaO** | 0,30 | 0,50 | 11,00 | | | | | |
| **SrO** | | | 0,10 | | | | | |
| **P₂O₅** | | | | | 3,80 | | | |
| **F** | | | | 1,30 | | 0,50 | | |
| **Er₂O₃** | | | | | | | 1,80 | |
| **Sm₂O₃** | | | | 0,0100 | | | | 0,0300 |
| **Eu₂O₃** | 0,0300 | | | 0,0200 | | | 0,0250 | 0,0200 |
| **Ho₂O₃** | 0,0200 | | | | | | 0,0125 | 0,0100 |
| **Tb₄O₇** | | | | | 0,0300 | | | |
| **Dy₂O₃** | | 0,0300 | 0,0300 | 0,0200 | | 0,0300 | | |
| **Sc₂O₃** | | | 0,0200 | | | 0,0500 | | 0,0100 |
| **Y₂O₃** | 0,0200 | | 0,0100 | 0,0100 | | | | |
| **La₂O₃** | | 0,0400 | | | 0,0150 | | | |
| **CeO** | | | | | | | 0,0125 | |
| **Pr₆O₁₁** | 0,0300 | | | | | 0,0200 | | |
| **Tm₂O₃** | | | 0,0200 | | 0,0300 | | | 0,0200 |
| **Yb₂O₃** | | 0,0300 | | | | 0,0300 | 0,0250 | 0,0300 |
| **Lu₂O₃** | | | 0,0300 | | | | | |

## Patentansprüche

1. Facettierter Schmuckstein aus Glas, enthaltend ein Gemisch aus wenigstens zwei Dotierstoffen, das die Identifikation des facettierten Schmucksteins ermöglicht, und die folgenden Komponenten:
(a) 35 bis 85 Gew.-% SiO₂;
(b) 0 bis 20 Gew.-% K₂O;
(c) 0 bis 20 Gew.-% Na₂O;
(d) 0 bis 5 Gew.-% Li₂O;
(e) 0 bis 13 Gew.-% ZnO;
(f) 0 bis 11 Gew.-% CaO;
(g) 0 bis 7 Gew.-% MgO;
(h) 0 bis 10 Gew.-% BaO;
(i) 0 bis 4 Gew.-% Al₂O₃;
(j) 0 bis 2 Gew.-% ZrO₂;
(k) 0 bis 4 Gew.-% B₂O₃;
(l) 0 bis 3 Gew.-% F;
(m) 0 bis 2,5 Gew.-% CI;
wobei die wenigstens zwei Dotierstoffe aus der Gruppe der Oxide der Seltenerdmetalle Scandium, Lanthan, Cer, Praseodym, Samarium, Europium, Yttrium, Terbium, Dysprosium, Holmium, Thulium, Ytterbium und Lutetium ausgewählt sind, wobei die Gesamtmenge der Oxide der Seltenerdmetalle Scandium, Lanthan, Cer, Praseodym, Samarium, Europium, Yttrium, Terbium, Dysprosium, Holmium, Thulium, Ytterbium und Lutetium 2-2000 mg/kg der Glaszusammensetzung beträgt, und sich die Mengenangaben zu 100 Gew.-% ergänzen.

2. Facettierter Schmuckstein aus Glas nach Anspruch 1, **dadurch gekennzeichnet, dass** die Gesamtmenge der Oxide der seltenen Erden 5-700 mg/kg der Glaszusammensetzung beträgt.

3. Facettierter Schmuckstein aus Glas nach wenigstens einem der Ansprüche 1 und 2, **dadurch gekennzeichnet, dass** ein Gemisch aus wenigstens drei Oxiden der Seltenerdmetalle eingesetzt wird.

4. Facettierter Schmuckstein aus Glas nach wenigstens einem der vorhergehenden Ansprüche 1 bis 3, **dadurch gekennzeichnet, dass** der facettierte Schmuckstein bei Anregung durch elektromagnetische Strahlung eine Fluoreszenz im Bereich von 300 bis 3000 nm, vorzugsweise im Bereich 300 bis 1100 nm aufweisen.

5. Facettierter Schmuckstein aus Glas gemäß wenigstens einem der vorhergehenden Ansprüche, der partiell verspiegelt ist.

## Claims

1. Faceted gemstone made of glass containing a mixture of at least two dopants, which makes it possible to identify the faceted gemstone, and the following components:
(a) 35 to 85 wt.% SiO₂;
(b) 0 to 20 wt.% K₂O;
(c) 0 to 20 wt.% Na₂O;
(d) 0 to 5 wt.% Li₂O;
(e) 0 to 13 wt.% ZnO;
(f) 0 to 11 wt.% CaO;
(g) 0 to 7 wt.% MgO;
(h) 0 to 10 wt.% BaO;
(i) 0 to 4 wt.% Al₂O₃;
(j) 0 to 2 wt.% ZrO₂;
(k) 0 to 4 wt.% B₂O₃;
(l) 0 to 3 wt.% F;
(m) 0 to 2.5 wt.% CI;
wherein the at least two dopants are selected from the group of the oxides of the rare earth metals scandium, lanthanum, cerium, praseodymium, samarium, europium, yttrium, terbium, dysprosium, holmium, thulium, ytterbium and lutetium, wherein the total amount of the oxides of the rare earth metals scandium, lanthanum, cerium, praseodymium, samarium, europium, yttrium, terbium, dysprosium, holmium, thulium, ytterbium and lutetium is 2-2000 mg/kg of the glass composition, and the stated amounts add up to 100 wt.%.

2. Faceted gemstone made of glass according to claim 1, **characterized in that** the total amount of the oxides of the rare earth metals is 5-700 mg/kg of the glass composition.

3. Faceted gemstone made of glass according to at least one of claims 1 and 2, **characterized in that** a mixture of at least three oxides of the rare earth metals is used.

4. Faceted gemstone made of glass according to at least one of the preceding claims 1 to 3, **characterized in that,** when excited by electromagnetic radiation, the faceted gemstone have fluorescence in the range of 300 to 3000 nm, preferably in the range of 300 to 1100 nm.

5. Faceted gemstone made of glass according to at least one of the preceding claims, which is partially mirrored.

## Revendications

1. Pierre ornementale à facettes en verre, contenant un mélange d'au moins deux dopants, lequel permet l'identification de la pierre ornementale à facettes, et les composants suivants :
(a) 35 à 85 % en poids de SiO₂ ;
(b) 0 à 20 % en poids de K₂O ;
(c) 0 à 20 % en poids de Na₂O ;
(d) 0 à 5 % en poids de Li₂O ;
(e) 0 à 13 % en poids de ZnO ;
(f) 0 à 11 % en poids de CaO ;
(g) 0 à 7 % en poids de MgO ;
(h) 0 à 10 % en poids de BaO ;
(i) 0 à 4 % en poids d'Al₂O₃ ;
(j) 0 à 2 % en poids de ZrO₂ ;
(k) 0 à 4 % en poids de B₂O₃ ;
(l) 0 à 3 % en poids de F ;
(m) 0 à 2,5 % en poids de CI ;
dans laquelle les au moins deux dopants sont choisis dans le groupe des oxydes des métaux de terres rares constitué par scandium, lanthane, cérium, praséodyme, samarium, europium, yttrium, terbium, dysprosium, holmium, thulium, ytterbium et lutétium, dans laquelle la quantité totale des oxydes des métaux de terres rares de scandium, lanthane, cérium, praséodyme, samarium, europium, yttrium, terbium, dysprosium, holmium, thulium, ytterbium et lutétium est de 2 à 2 000 mg/kg de la composition de verre et les indications de quantités sont complémentaires jusqu'à 100 % en poids.

2. Pierre ornementale à facettes en verre selon la revendication 1, **caractérisée en ce que** la quantité totale des oxydes des terres rares est de 5 à 700 mg/kg de la composition de verre.

3. Pierre ornementale à facettes en verre selon au moins l'une des revendications 1 et 2, **caractérisée en ce qu'**un mélange d'au moins trois oxydes des métaux de terres rares est utilisé.

4. Pierre ornementale à facettes en verre selon au moins l'une des revendications précédentes 1 à 3, **caractérisée en ce que** la pierre ornementale à facettes présentent, lorsqu'elle est stimulée par un rayonnement électromagnétique, une fluorescence dans la plage de 300 à 3 000 nm, de préférence dans la plage de 300 à 1 100 nm.

5. Pierre ornementale à facettes en verre selon au moins l'une des revendications précédentes, laquelle est partiellement réfléchissante.
